# EUROPÄISCHE PATENTSCHRIFT

(11) **EP 3 315 416 B1**
(45) Veröffentlichungstag und Bekanntmachung des Hinweises auf die Patenterteilung: **13.05.2020**
(21) Anmeldenummer: 16196300.4
(22) Anmeldetag: 28.10.2016
(51) Int. Cl.: B64F 1/305

(54) **KUPPELMODUL ZUR BILDUNG EINER SCHNITTSTELLE ZWISCHEN DER KABINE EINER FLUGGASTBRÜCKE UND EINEM FLUGZEUG**
COUPLING MODULE FOR FORMING AN INTERFACE BETWEEN THE CABIN OF A PASSENGER BRIDGE AND AN AIRPLANE
MODULE DE COUPLAGE DESTINÉ À FORMER UNE INTERFACE ENTRE LA CABINE D'UNE PASSERELLE AÉROPORTUAIRE ET UN AVION

(43) Veröffentlichungstag der Anmeldung: 02.05.2018
(73) Patentinhaber: Hübner GmbH & Co. KG, 34123 Kassel (DE)
(72) Erfinder: Schuster, Heinz, 34123 Kassel (DE)
(74) Vertreter: Patentanwälte Walther Hinz Bayer PartGmbB

(56) Entgegenhaltungen:
- EP-A1- 2 987 730
- DE-U1- 8 309 614

## Beschreibung

Die Erfindung betrifft ein Kuppelmodul zur Bildung einer Schnittstelle zwischen der Kabine einer Fluggastbrücke und einem Flugzeug, wobei das Kuppelmodul ein Vordach und eine von dem Vordach überspannte Bodeneinrichtung aufweist, und wobei die Bodeneinrichtung relativ zur Kabine um eine horizontale Schwenkachse schwenkbar ist.

### STAND DER TECHNIK

Fluggastbrücken sind aus dem Stand der Technik hinreichend bekannt. Diese dienen dem Übergang für Personen von dem Flugzeug unmittelbar in das Flughafengebäude. Da der Zutritt in das Flughafengebäude häufig höher angeordnet ist als die Türöffnung des Flugzeugs, verlaufen die Fluggastbrücken, die am vorderen, beweglichen Ende durch ein Fahrgestell gehalten sind, häufig schräg nach unten in Richtung auf die Türöffnung des Flugzeugs zu.

Am unteren Ende der Fluggastbrücke weist diese eine um eine vertikale Achse verschwenkbare Kabine auf, wobei am vorderen Ende das Kuppelmodul zum Übergang von der Kabine in das Flugzeug an der Kabine angeordnet ist.

Um das Kuppelmodul an die Türöffnung des Flugzeugs anzupassen, kann dieses an der Kabine der Fluggastbrücke verschwenkt werden. Eine um eine vertikale Achse verschwenkbare Kabine zeigt beispielsweise die US 4,559,660 A1.

Weiterhin ist bekannt, die Bodeneinrichtung um eine horizontal verlaufende Achse zu verschwenken, wie mit der EP 2 397 411 B1 offenbart. Darin wird vorgeschlagen, dass das Kuppelmodul und damit auch die Bodeneinrichtung durch die Kabine der Fluggastbrücke um eine horizontal verlaufende Mittellängsachse verschwenkbar gehalten wird. Die Mittellängsachse verläuft dabei im Wesentlichen mittig durch die Öffnung im Kuppelmodul, die sich zwischen der Bodeneinrichtung und dem Vordach erstreckt. Beispielsweise durchstößt dabei die Mittellängsachse etwa den Flächenmittelpunkt einer Fläche, die durch das Vordach und die Bodeneinrichtung aufgespannt wird.

Zur tragenden Aufnahme des Kuppelmoduls an der Kabine dienen kreisbogenförmige Schienenabschnitte sowie mehrere Rollen, die an den kreisbogenförmigen Schienenabschnitten entlang abrollen können. Die kreisbogenförmigen Schienenabschnitte erstrecken sich dabei um die Mittellängsachse zur Verschwenkung des Kuppelmoduls. Die Bodeneinrichtung wird dadurch an dem Rahmen des Kuppelmoduls tragend gehalten, sodass dieser entsprechend belastbar ausgeführt werden muss, insbesondere wenn das Gewicht der Bodeneinrichtung und das Gewicht beispielsweise von Personen oder Gegenständen, die auf der Bodeneinrichtung aufstehen, auch über den Rahmen aufgenommen werden müssen.

Aufgrund der Seitenbewegung in der Bodeneinrichtung, die sich bei einer Schwenkbewegung des Kuppelmoduls um eine über der Bodeneinrichtung liegende Mittellängsachse ergibt, entsteht ein seitlicher Versprung zwischen der Kabine und der Bodeneinrichtung des Kuppelmoduls. Ein entstehender Spalt muss mit entsprechenden Flächenkörpern, beispielsweise Wellenbalge, aufwändig verschlossen werden. Weiterhin kann durch die Verschwenkung der Bodeneinrichtung relativ zur Bodeneinrichtung der Kabine ein seitlicher und vertikaler Versprung entstehen, der Stolperstellen für die Passagiere bilden kann. Darüber hinaus ist die konstruktive Ausgestaltung der tragenden Aufnahme des Kuppelmoduls an der Kabine der Fluggastbrücke mittels der kreisbogenförmigen Schienenabschnitte und der Rollen aufwändig, und die Bodeneinrichtung erfährt in gewisser Weise eine hängende Anordnung an dem Rahmen des Kuppelmoduls. Um eine entsprechende Belastbarkeit der Bodeneinrichtung sicherzustellen, muss das Kuppelmodul mit einer tragenden Struktur ausgestaltet werden.

Aus der EP 2 987 730 A1 ist ein Kuppelmodul zur Bildung einer Schnittstelle zwischen der Kabine einer Fluggastbrücke und einem Flugzeug bekannt, wobei das Kuppelmodul ein Vordach, eine von dem Vordach überspannte Bodeneinrichtung und einen Trägerkörper aufweist, und wobei die Bodeneinrichtung wenigstens mittelbar das Vordach trägt, und wobei wenigstens die Bodeneinrichtung und das Vordach wenigstens mittelbar tragend an den Trägerkörpern derart aufgenommen sind, dass sie relativ zur Kabine um eine horizontale Schwenkachse an dem Trägerkörper verschwenkbar sind. Die Trägerkörper sind durch gebogene Stahlrohrsegmente gebildet, die auf dem Umfang verteilt so angeordnet sind, dass die horizontale Schwenkachse etwa in der Mitte einer mit dem Kuppelmodul gebildeten Durchgangsöffnung liegt, und wobei die mittige Schwenkachse auch den Krümmungsmittelpunkt der Stahlrohrsegmente bilden muss. Das Verschwenken erfolgt dabei mittels eines Schwenkantriebes, der sich als Kolbenzylinderantrieb darstellt. Durch den Schwenkantrieb erfolgt eine Verschwenkung der Bodeneinrichtung mit dem Vordach, die zu einer Verlagerung von auf den Stahlrohrsegmenten laufenden Rollen führt, wodurch eine aufwändige Konstruktion entsteht, da auf dem Umfang verteilt bereits vier Stahlrohrsegmente mit jeweils mehreren auf diesen laufenden Rollen vorhanden sind.

Die DE 83 09 614 U1 offenbart ein weiteres Kuppelmodul zwischen der Kabine einer Fluggastbrücke und einem Flugzeug, wobei das Kuppelmodul eine Bodeneinrichtung aufweist, die einzeln an einem in der Bodeneinrichtung eingelassenen Trägerkörper verschwenkbar aufgenommen ist. Ein die Bodeneinrichtung überspannendes Vordach wird dabei nicht mit verschwenkt, wodurch bei einer Verschwenkung der Bodeneinrichtung auftretende Spalte mit entsprechenden Mitteln geschlossen werden müssen.

### OFFENBARUNG DER ERFINDUNG

Aufgabe der Erfindung ist die Weiterbildung eines Kuppelmoduls zur Bildung einer Schnittstelle zwischen der Kabine einer Fluggastbrücke und einem Flugzeug, bei dem eine verbesserte Bewegung der Bodeneinrichtung bei einer Verschwenkung des Kuppelmoduls an der Kabine entsteht, wobei die Konstruktion des Kuppelmoduls und die Anordnung des Kuppelmoduls an der Kabine weiter vereinfacht werden sollen.

Diese Aufgabe wird ausgehend von einem Kuppelmodul gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Kuppelmodul einen Trägerkörper aufweist, der unter der Bodeneinrichtung angeordnet ist, wobei wenigstens die Bodeneinrichtung und das Vordach wenigstens mittelbar tragend an dem Trägerkörper aufgenommen und um die Schwenkachse an diesem schwenkbar sind, wobei die gemeinsame Schwenkachse in oder unter der Bodeneinrichtung angeordnet ist, wobei der Trägerkörper in Querrichtung mittig unter der Bodeneinrichtung angeordnet ist und wobei die Schwenkachse senkrecht zur Querrichtung verläuft und unter der begehbaren Oberfläche der Bodeneinrichtung angeordnet ist, und wobei wenigstens ein Stützrahmen vorgesehen ist, mit dem der Pendelrahmen an der Bodeneinrichtung abgestützt ist, sodass der Pendelrahmen mit dem Vordach mittels des Stützrahmens starr an der Bodeneinrichtung angeordnet ist.

Kerngedanke der Erfindung ist die mechanische Vereinfachung des Aufbaus des Kuppelmoduls, wobei unter dem Vordach auch beispielsweise ein Pendelrahmen mit umfasst ist, der von der Bodeneinrichtung mitgetragen wird. Mittels des erfindungsgemäßen Aufbaus kann die Bodeneinrichtung entsprechend belastbar an der Kabine befestigt werden, wobei die Verschwenkbarkeit der Bodeneinrichtung an der Kabine erhalten bleibt. Die Bodeneinrichtung hängt damit nicht mehr am Vordach bzw. dessen Pendelrahmen, vielmehr bietet die Erfindung den Vorteil, dass das Vordach und beispielsweise auch der Pendelrahmen auf der Bodeneinrichtung in gewisser Weise aufstehen, also mittelbar oder sogar unmittelbar angeordnet ist bzw. sind. Ein wesentlicher Vorteil ist dabei darin zu sehen, dass sich keine relative Lagerveränderung mehr zwischen der Bodeneinrichtung und dem Vordach ergibt, und es kann eine feste Anordnung des Vordaches an der Bodeneinrichtung vorgesehen werden.

Erfindungsgemäß weist damit das Kuppelmodul einen Trägerkörper auf, der in der oder unter der Bodeneinrichtung angeordnet ist, wobei wenigstens die Bodeneinrichtung und das Vordach tragend an dem Trägerkörper aufgenommen und um eine Schwenkachse an diesem verschwenkbar sind.

Dabei ist die Anordnung des Kuppelmoduls an der Kabine mittels eines Trägerkörpers so vorgesehen, dass dieser im Wesentlichen unterhalb des Kuppelmoduls, also wenigstens unterhalb der Bodeneinrichtung, insbesondere aber unterhalb der begehbaren Ebene der Bodeneinrichtung des Kuppelmoduls angeordnet ist. Wird das Kuppelmodul an der Kabine der Fluggastbrücke verschwenkt, so führt die Bodeneinrichtung folglich eine Wippbewegung aus, ohne dabei seitlich zu verschwenken. Im Vergleich zur bisherigen Anordnung des Kuppelmoduls an der Kabine wird damit die Schaukelbewegung der Bodeneinrichtung bei einem Verschwenken des Kuppelmoduls vermieden, und die Bodeneinrichtung führt lediglich noch eine Wippbewegung um die Schwenkachse aus, die im oder unter der Bodeneinrichtung liegt. Durch die einfache Ausbildung eines Trägerkörpers entfallen aufwändige Verbindungsmittel zwischen einem Pendelrahmen des Kuppelmoduls und einem Grundrahmen der Kabine der Fluggastbrücke. Der Trägerkörper nimmt dabei im Wesentlichen vollständig das Gewicht des Kuppelmoduls auf, wobei das Kuppelmodul als wesentliche Komponenten die Bodeneinrichtung und das Vordach umfasst. Überdies kann das Kuppelmodul weitere Komponenten umfassen, beispielsweise einen Stützrahmen, einen Pendelrahmen und eine Einrichtung, um das Vordach in Richtung zum Flugzeug ausfahren zu können.

Der Trägerkörper erstreckt sich dabei derart unter die Kabine, dass der Trägerkörper zur Aufnahme der wesentlichen Gewichtskräfte des Kuppelmoduls an der Kabine angeordnet werden kann. Der Trägerkörper untergreift in gewisser Weise die Bodeneinrichtung des Kuppelmoduls, und die Bodeneinrichtung des Kuppelmoduls ist in der Schwenkachse kippbeweglich aufgenommen. Muss die Neigung der Fluggastbrücke verändert werden, so ist die Bodeneinrichtung des Kuppelmoduls schließlich wieder in die Horizontale zu bringen. Damit kann die Bodeneinrichtung und folglich wenigstens auch das Vordach des Kuppelmoduls um die Schwenkachse im oder unter der Bodeneinrichtung des Kuppelmoduls verschwenkt werden, um die Horizontale der Bodeneinrichtung des Kuppelmoduls wieder herzustellen.

Gemäß der Erfindung weist das Kuppelmodul einen Trägerkörper auf, der in oder unter der Bodeneinrichtung angeordnet ist, wobei wenigstens die Bodeneinrichtung und das Vordach zumindest mittelbar tragend an dem Trägerkörper aufgenommen und um die Schwenkachse an diesem schwenkbar sind. Dadurch verringert sich der konstruktive Aufwand des Kuppelmoduls, da das Kuppelmodul als Ganzes verschwenkbar ist, ohne dass eine hängende Anordnung des Kuppelmoduls an der Stirnseite der Kabine erforderlich ist.

Der Trägerkörper ist hierfür in Querrichtung gesehen mittig unter der Bodeneinrichtung angeordnet und die Schwenkachse verläuft senkrecht zur Querrichtung und ist unter der begehbaren Oberfläche der Bodeneinrichtung angeordnet. Die Querrichtung bildet dabei die Richtung, die im Wesentlichen parallel zur Flugzeuglängsachse verläuft, wenn die Fluggastbrücke mit der Kabine und dem Kuppelmodul seitlich am Flugzeug angeordnet wird. Die Bodeneinrichtung des Kuppelmoduls ist im Wesentlichen länglich ausgeführt, wobei die längliche Erstreckung der Bodeneinrichtung in Querrichtung verläuft. Hingegen läuft die Schwenkachse in einer Richtung, die senkrecht zur Querrichtung angeordnet ist, sodass die Bodeneinrichtung um die Schwenkachse verschwenken kann, wobei dann, wenn die Schwenkachse mittig im oder unter der Bodeneinrichtung angeordnet ist und wenn das Kuppelmodul verschwenkt, sich die gegenüberliegenden Außenendseiten der Bodeneinrichtung des Kuppelmoduls um einen jeweils gleichen Betrag heben und senken.

Ein besonderer Vorteil wird erreicht, wenn unter der Bodeneinrichtung an den in Querrichtung liegenden Außenendseiten der Bodeneinrichtung jeweilige Endseitenträger ausgebildet sind, mit denen die Außenendseiten der Bodeneinrichtung hubbeweglich verbunden sind. Insbesondere ist vorgesehen, dass die Bodeneinrichtung mit dem Vordach mittels der mittigen Lagerung an dem Trägerkörper eine Wippenanordung bildet, sodass bei einer Verschwenkung der Bodeneinrichtung die Höhe der ersten Außenendseite der Bodeneinrichtung über dem ersten Endseitenträger zunimmt und die Höhe der zweiten Außenendseite der Bodeneinrichtung über dem gegenüberliegenden zweiten Endseitenträger in gleicher Weise abnimmt und umgekehrt.

Mit weiterem Vorteil ist zwischen den Außenendseiten der Bodeneinrichtung und den Endseitenträgern wenigstens ein mechanisches Verbindungselement angeordnet. Die beiden Endseitenträger dienen dazu, die mechanischen Verbindungselemente für das Verschwenken der Bodeneinrichtung abzustützen, wobei die Verbindungselemente nicht zur Aufnahme der Haupt-Traglast des Kuppelmoduls dienen. Vielmehr dienen die Endseitenträger zur Einleitung einer Verschwenkbewegung des Kuppelmoduls, wobei um die Schwenkachse asymmetrische Belastungen von den Endseitenträgern aufgenommen werden können.

Beispielsweise ist wenigstens ein Schwenkantrieb vorgesehen, mit dem die mechanischen Verbindungselemente zwischen den Außenendseiten der Bodeneinrichtung und den Endseitenträgern ansteuerbar und/oder aktivierbar sind. Soll das Kuppelmodul und damit die Bodeneinrichtung um die Schwenkachse in einer ersten Richtung verschwenkt werden, so kann der Schwenkantrieb aktiviert werden, und die mechanischen Verbindungselemente drücken eine Seite der Bodeneinrichtung von den Endseitenträgern weg, und auf der gegenüberliegenden Seite nähert sich die Außenendseite der Bodeneinrichtung dem beispielsweise darunter liegenden Endseitenträger. Soll die Bodeneinrichtung in einer entgegengesetzten Richtung um die Schwenkachse verschwenkt werden, so wird die Drehrichtung des Schwenkantriebs umgekehrt, und die mechanischen Verbindungselemente werden in entgegengesetzter Richtung angesteuert, wobei die Verschwenkkräfte des Bodens über die Endseitenträger abgestützt werden. Der Schwenkantrieb ist beispielsweise mittels Koppelelementen mit den mechanischen Verbindungselementen verbunden, wobei die Koppelelemente beispielsweise als Zug- und/oder Druckstangen und/oder als Torsionsstangen ausgebildet sind. Befindet sich beispielsweise ein einziger oder mehrere Schwenkantriebe mittig unter der Bodeneinrichtung, beispielsweise in Anordnung am Trägerkörper, so können sich zu beiden Seiten Koppelelemente erstrecken, die mit dem Schwenkantrieb bewegbar sind, und die mechanischen Verbindungselemente auf den gegenüberliegenden Außenendseiten der Bodeneinrichtung werden in jeweils entgegengesetzter Richtung angesteuert.

Die Erfindung sieht ferner vor, dass zur weiteren Vereinfachung des erfindungsgemäßen Kuppelmoduls das Vordach an einem Pendelrahmen aufgenommen ist, der im Wesentlichen vor einem Grundrahmen der Kabine der Fluggastbrücke anordbar ist und wobei der Pendelrahmen bei einer Verschwenkung des Kuppelmoduls planparallel vor dem Grundrahmen mitverschwenkbar ist. Das Vordach kann zum Ausfahren an der oberen Seite von dem Pendelrahmen wegbewegt werden, wird das Vordach wieder eingefahren, so wird dieses an den Pendelrahmen wieder herangezogen. Der Pendelrahmen kann sich dabei etwa senkrecht zur Bodeneinrichtung des Kuppelmoduls erstrecken. Insbesondere schließt der Pendelrahmen mit der Bodeneinrichtung des Kuppelmoduls auf der Seite ab, die zur Kabine der Fluggastbrücke hin weist.

Zur Aussteifung des Kuppelmoduls ist gemäß der Erfindung wenigstens ein Stützrahmen vorgesehen, mit dem der Pendelrahmen an der Bodeneinrichtung abgestützt ist, sodass der Pendelrahmen mittels des Stützrahmens starr an der Bodeneinrichtung angeordnet ist. Beispielsweise befinden sich in den Außenendseiten der Bodeneinrichtung jeweilige Stützrahmen, die den Pendelrahmen mit der Bodeneinrichtung starr verbinden.

Mit weiterem Vorteil ist zwischen dem Pendelrahmen und dem Grundrahmen wenigstens ein flexibler Flächenkörper angeordnet. Der flexible Flächenkörper kann beispielsweise einen Wellenbalg umfassen, wobei eine einzige Welle eines entsprechenden Flächenkörpers bereits hinreichend sein kann. Damit wird eine Spaltöffnung zwischen dem Pendelrahmen und dem Grundrahmen geschlossen, wobei die Welle derart dimensioniert ist, dass die Pendelbewegung des Pendelrahmens, hervorgerufen durch die Verschwenkung des Kuppelmoduls, vor dem im Wesentlichen ruhenden Grundrahmen frei beweglich ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht einer Fluggastbrücke mit einem an einer Kabine der Fluggastbrücke angeordneten Kuppelmodul,
- Fig. 2: eine Detailansicht eines Kuppelmoduls in Anordnung an eine Kabine einer Fluggastbrücke,
- Fig. 3: eine weitere Detailansicht des Kuppelmoduls mit den Merkmalen der Erfindung,
- Fig. 4: eine Vorderansicht des Kuppelmoduls in einem relativ zu einem Grundrahmen der Fluggastbrücke nicht verschwenkten Zustand und
- Fig. 5: die Vorderansicht des Kuppelmoduls gemäß Figur 4, wobei das Kuppelmodul um die Schwenkachse relativ zum Grundrahmen der Fluggastbrücke verschwenkt dargestellt ist.

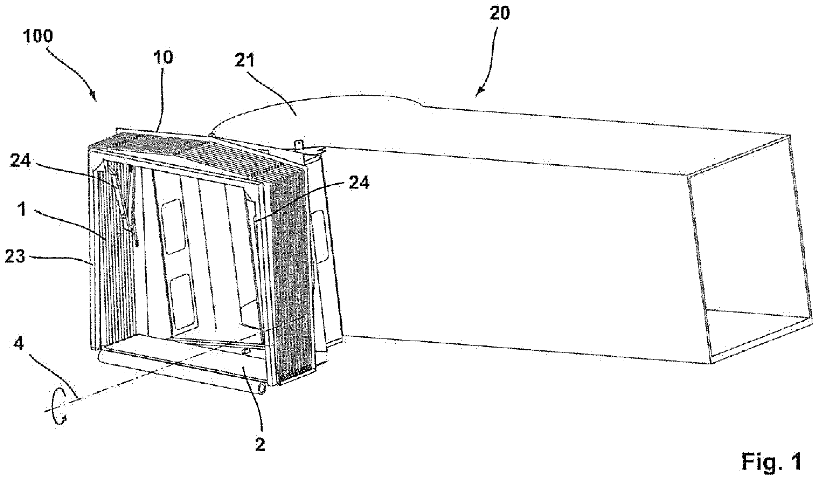

Figur 1 zeigt ein Kuppelmodul 100 in Anordnung an einer Fluggastbrücke 20. An einem vorderen, zum Flugzeug weisenden Ende der Fluggastbrücke 20 ist eine Kabine 21 angeordnet, die Bestandteil der Fluggastbrücke 20 ist. An der Kabine 21 ist verschwenkbar um eine gedachte horizontale Schwenkachse 4 das Kuppelmodul 100 angeordnet. Das Kuppelmodul 100 zeigt auf seiner freien Seite einen an einem Vordach 1 angeordneten Rahmen, der an die Außenhaut des Flugzeugs anliegend angeordnet werden kann, und der Rahmen ist als Bumper 23 ausgeführt. Im Inneren des Kuppelmoduls 100 ist zu beiden Seiten jeweils ein Gelenkarm 24 vorgesehen, der der Ausführung einer Ausstellbewegung des Vordachs 1 des Kuppelmoduls 100 dient, um schlussendlich den Bumper 23 an die Außenhaut des Flugzeugrumpfes anlegen zu können. Die Darstellung des Kuppelmoduls 100 zeigt darüber hinaus die Bodeneinrichtung 2, auf der die Passagiere unmittelbar nach Verlassen des Flugzeugs auftreten.

Verschwenkt das Kuppelmodul 100 um die Schwenkachse 4, so führt die Bodeneinrichtung 2 eine Schwenkbewegung um die Schwenkachse 4 aus, die eine Art Wippbewegung bildet. Das Vordach 1 mit den Gelenkarmen 24 sowie ein hinterseitiger Pendelrahmen 10 verschwenken mit der Schwenkbewegung mit.

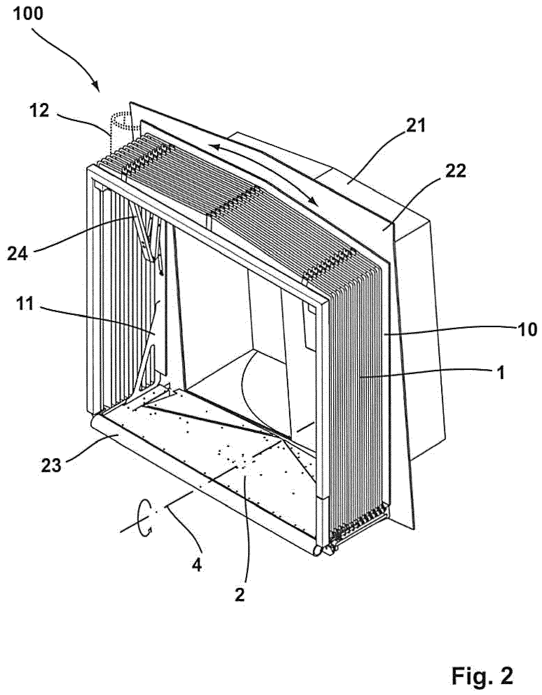

Figur 2 zeigt eine detailliertere perspektivische Ansicht des Kuppelmoduls 100 in Anordnung an der Kabine 21, wobei das Kuppelmodul 100 bereits leicht um die Schwenkachse 4 verschwenkt ist. Erkennbar ist dies daran, dass der Pendelrahmen 10 verdreht vor dem Grundrahmen 22 der Kabine 21 ausgerichtet ist.

Die imaginäre Schwenkachse 4 verläuft unter der Bodeneinrichtung 2 des Kuppelmoduls 100, und vorderseitig an der Bodeneinrichtung 2 ist ein Bumper 23 angeordnet, der an oder vor die Außenhaut des Flugzeugs gefahren wird.

Durch die Perspektive ist einer der beiden seitlichen Stützrahmen 11 und einer der beiden Gelenkarme 24 erkennbar, wobei das Vordach 1 im eingefahrenen Zustand dargestellt ist.

Zwischen dem Grundrahmen 22 und dem Pendelrahmen 10 befindet sich ein Flächenkörper 12 in Form einer Welle, welche Welle beispielsweise einen Teil eines Wellenbalges bildet. Der Pendelrahmen 10, der sich mit der Verschwenkung des Kuppelmoduls 100 mitbewegt, gezeigt durch den Doppelpfeil, ist leicht beabstandet vor dem Grundrahmen 22 angeordnet. Der Flächenkörper 12 sorgt dabei für eine Abdichtung des vorhandenen Spaltes, sodass Nässe oder beispielsweise auch Wind nicht in den Passagierbereich der Kabine 21 eintreten können.

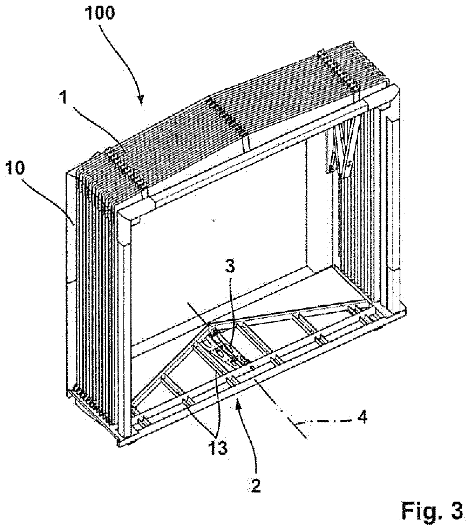

Figur 3 zeigt die Ansicht des Kuppelmoduls 100, wobei der begehbare Bereich der Bodeneinrichtung 2 entfernt wurde, sodass ein Bodenrahmen 13 sichtbar wird. Unterhalb des Bodenrahmens 13 befindet sich der Trägerkörper 3, und der Bodenrahmen 13 ist über Gelenkverbindungen mit dem Trägerkörper 3 verbunden. Damit ist die Bodeneinrichtung 2 mit dem Bodenrahmen 13 um die Schwenkachse 4 verschwenkbar am Trägerkörper 3 aufgenommen. Der Trägerkörper 3 kann auf nicht näher gezeigte Weise an der Kabine bzw. an einem Fahrwerk der Fluggastbrücke starr angeordnet werden, und der Trägerkörper 3 ist so dimensioniert, dass das Gewicht des Kuppelmoduls 100 sowie einer Anzahl von Passagieren im Kuppelmodul 100 aufgenommen werden können.

Auf der hinteren Seite des Vordachs 1, beispielhaft dargestellt als Faltenvordach, ist der Pendelrahmen 10 angeordnet, der mit dem Vordach 1 die Bodeneinrichtung 2 im Wesentlichen überspannt.

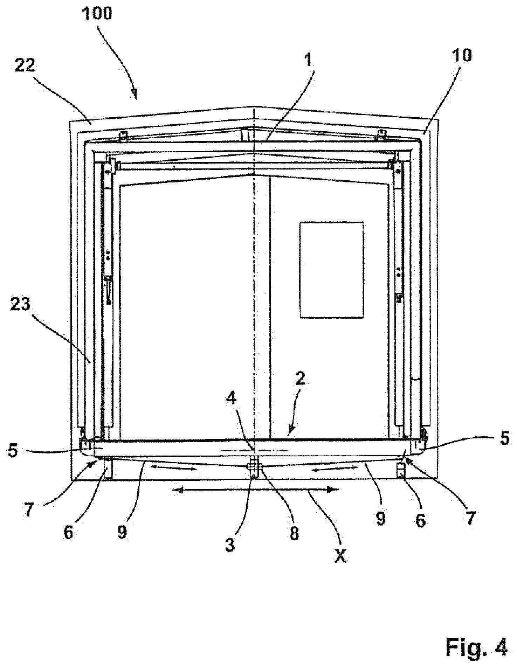

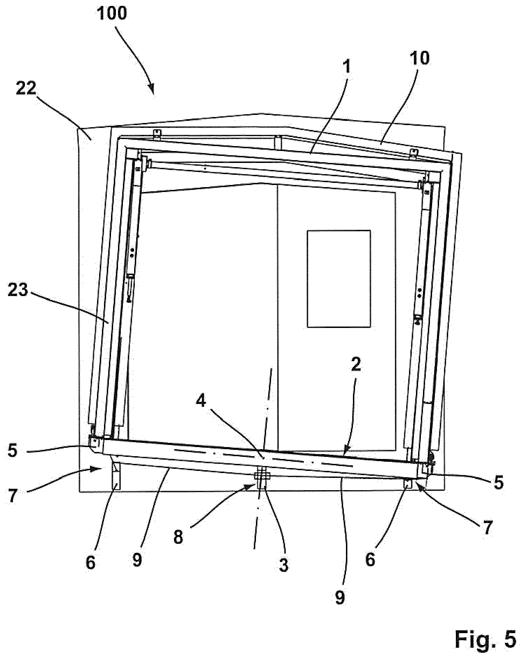

Die Figuren 4 und 5 zeigen jeweilige Ansichten des Kuppelmoduls 100 in einem nicht verdrehten Zustand (Figur 4) und in einem gegenüber dem Grundrahmen 22 verdrehten Zustand (Figur 5).

Das Kuppelmodul 100 ist dargestellt mit der Bodeneinrichtung 2 und mit dem Vordach 1, das mit dem Pendelrahmen 10 gehalten wird, und wobei die Bodeneinrichtung 2, das Vordach 1 und der Pendelrahmen 10 eine zueinander im Wesentlichen starre, als Ganzes verdrehbare Einheit bilden.

Unter der Bodeneinrichtung 2 befindet sich der Trägerkörper 3, und die Schwenkachse 4 liegt im bzw. unter der Bodeneinrichtung 2. Vorderseitig schließt das Kuppelmodul 100 mit dem Bumper 23 ab.

Die Bodeneinrichtung 2 weist in Querrichtung X, durch einen Doppelpfeil dargestellt in Figur 4, sich gegenüberliegende Außenendseiten 5 auf, und unter den Außenendseiten 5 befinden sich Endseitenträger 6, die mit dem Grundrahmen 22 starr verbunden sind.

Zwischen den Außenendseiten 5 und den Endseitenträgern 6 sind mechanische Verbindungselemente 7 ausgebildet. Diese sind mit Koppelelementen 9 gekoppelt, die mit einem gemeinsamen Schwenkantrieb 8 verbunden sind.

Wird der Schwenkantrieb 8 aktiviert, so wird über die Koppelelemente 9 eine Bewegung in die Verbindungselemente 7 eingeleitet, derart, dass das Kuppelmodul 100 vor dem Grundrahmen 22 in der Schwenkachse 4 verdrehen kann.

Figur 4 zeigt die Verbindungselemente 7 in einem nicht aktivierten Zustand, wobei bei einem Aktivieren des Schwenkantriebs 8 über die Koppelelemente 9 eine Bewegung in die Verbindungselemente 7 eingeleitet wird, die zu der Verdrehung des Kuppelmoduls 100 führen, wie mit der Figur 5 dargestellt. Die Verdrehung des Kuppelmoduls 100 erfolgt in der Schwenkachse 4, die in der oder unter der Bodeneinrichtung 2 ausgebildet ist. Für eine Rückführung der Verdrehung des Kuppelmoduls 100 kann beispielsweise der Schwenkantrieb 8 in entgegengesetzter Richtung aktiviert werden, um das Kuppelmodul 100 in die horizontale Lage oder in eine entgegengesetzte Schwenkrichtung zu überführen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Kuppelmodul

- 1: Vordach
- 2: Bodeneinrichtung
- 3: Trägerkörper
- 4: Schwenkachse
- 5: Außenendseite
- 6: Endseitenträger
- 7: Verbindungselement
- 8: Schwenkantrieb
- 9: Koppelelement
- 10: Pendelrahmen
- 11: Stützrahmen
- 12: Flächenkörper
- 13: Bodenrahmen

- 20: Fluggastbrücke
- 21: Kabine
- 22: Grundrahmen
- 23: Bumper
- 24: Gelenkarm

- X: Querrichtung

## Patentansprüche

1. Kuppelmodul (100) zur Bildung einer Schnittstelle zwischen der Kabine (21) einer Fluggastbrücke (20) und einem Flugzeug, wobei das Kuppelmodul (100) ein Vordach (1) und eine von dem Vordach (1) überspannte Bodeneinrichtung (2) aufweist, wobei die Bodeneinrichtung (2) relativ zur Kabine (21) um eine horizontale Schwenkachse (4) schwenkbar ist, wobei die Bodeneinrichtung (2) wenigstens mittelbar das Vordach (1) trägt, und wobei das Vordach (1) an einem Pendelrahmen (10) angeordnet ist, wobei der Pendelrahmen (10) an der Bodeneinrichtung (2) tragend aufgenommen ist,
**dadurch gekennzeichnet,**
**dass**
- das Kuppelmodul (100) einen Trägerkörper (3) aufweist, der unter der Bödeneinrichtung (2) angeordnet ist, wobei
- wenigstens die Bodeneinrichtung (2) und das Vordach (1) wenigstens mittelbar tragend an dem Trägerkörper (3) aufgenommen und um die Schwenkachse (4) an diesem schwenkbar sind,
- wobei die gemeinsame Schwenkachse (4) in oder unter der Bodeneinrichtung (2) angeordnet ist, wobei
- der Trägerkörper (3) in Querrichtung (X) mittig unter der Bodeneinrichtung (2) angeordnet ist und wobei die Schwenkachse (4) senkrecht zur Querrichtung (X) verläuft und unter der begehbaren Oberfläche der Bodeneinrichtung (2) angeordnet ist, und wobei
- wenigstens ein Stützrahmen (11) vorgesehen ist, mit dem der Pendelrahmen (10) an der Bodeneinrichtung (2) abgestützt ist, sodass der Pendelrahmen (10) mit dem Vordach (1) mittels des Stützrahmens (11) starr an der Bodeneinrichtung (2) angeordnet ist.

2. Kuppelmodul (100) nach Anspruch 1,
**dadurch gekennzeichnet,**
**dass** unter der Bodeneinrichtung (2) an den in Querrichtung (X) liegenden Außenendseiten (5) der Bodeneinrichtung (2) jeweilige Endseitenträger (6) ausgebildet sind, mit denen die Außenendseiten (5) der Bodeneinrichtung (2) hubbeweglich verbunden sind.

3. Kuppelmodul (100) nach Anspruch 2,
**dadurch gekennzeichnet,**
**dass** die Bodeneinrichtung (2) mit dem Vordach (1) mittels der mittigen Lagerung an dem Trägerkörper (3) eine Wippenanordnung bildet, sodass bei einer Verschwenkung der Bodeneinrichtung (2) die Höhe der ersten Außenendseite (5) der Bodeneinrichtung (2) über dem ersten Endseitenträger (6) zunimmt und die Höhe der zweiten Außenendseite (5) der Bodeneinrichtung (2) über dem gegenüberliegenden zweiten Endseitenträger (6) abnimmt und umgekehrt.

4. Kuppelmodul (100) nach einem der Ansprüche 2 oder 3,
**dadurch gekennzeichnet,**
**dass** zwischen den Außenendseiten (5) der Bodeneinrichtung (2) und den Endseitenträgern (6) wenigstens ein mechanisches Verbindungselement (7) angeordnet ist.

5. Kuppelmodul (100) nach Anspruch 4,
**dadurch gekennzeichnet,**
**dass** wenigstens ein Schwenkantrieb (8) vorgesehen ist, mit dem die mechanischen Verbindungselemente (7) zwischen den Außenendseiten (5) der Bodeneinrichtung (2) und den Endseitenträgern (6) ansteuerbar und/oder aktivierbar sind.

6. Kuppelmodul (100) nach Anspruch 5,
**dadurch gekennzeichnet,**
**dass** wenigstens ein Schwenkantrieb (8) vorgesehen ist, wobei zwischen dem Schwenkantrieb (8) und beiden mechanischen Verbindungselementen (7) ein jeweiliges Koppelelement (9) ausgebildet ist.

7. Kuppelmodul (100) nach Anspruch 6,
**dadurch gekennzeichnet,**
**dass** die Koppelelemente (9) zwischen dem Schwenkantrieb (8) und den mechanischen Verbindungselementen (7) als Zug- und/oder Druckstangen und/oder als Torsionsstangen ausgebildet sind.

8. Kuppelmodul (100) nach Anspruch 6 oder 7,
**dadurch gekennzeichnet,**
**dass** der Schwenkantrieb (8) mittig unter der Bodeneinrichtung (2) ausgebildet ist und/oder dass der Schwenkantrieb (8) am Trägerkörper (3) angeordnet ist.

9. Kuppelmodul (100) nach einem der vorgenannten Ansprüche,
**dadurch gekennzeichnet,**
**dass** im Bereich zwischen dem Pendelrahmen (10) und einem Grundrahmen (22) der Kabine (21) wenigstens ein flexibler Flächenkörper (12) angeordnet ist.

## Claims

1. A coupling module (100) for forming an interface between a cabin (21) of a passenger boarding bridge (20) and an aircraft, wherein the coupling module (100) comprises a canopy roof (1) and a floor arrangement (2) spanned by the canopy roof (1), wherein the floor arrangement (2) is pivotable relative to the cabin (21) about a horizontal pivot axis (4), wherein the floor arrangement (2) carries the canopy roof (1) at least indirectly, and wherein the canopy roof (1) is disposed on a pendular frame (10), wherein the pendular frame (10) is mounted in a supporting manner on the floor arrangement (2), **characterized in that**
- the coupling module (100) comprises a support body (3), which is disposed below the floor arrangement (2), wherein
- at least the floor arrangement (2) and the canopy roof (1) are at least indirectly received in a supported manner on the support body (3) and are pivotable thereon around the pivoting axis (4),
- wherein the common pivoting axis (4) is disposed in or below the floor arrangement (2), wherein
- the support body (3) is disposed centrically in the transverse direction (X) below the floor arrangement (2) and wherein the pivoting axis (4) runs perpendicularly to the transverse direction (X) and is disposed below the walkable surface of the floor arrangement (2), and wherein
- at least one supporting frame (11) is provided, with which the pendular frame (10) is supported on the floor arrangement (2), so that the pendular frame (10) with the canopy roof (1) is rigidly disposed on the floor arrangement (2) by means of the supporting frame (11).

2. The coupling module (100) according to claim 1,
**characterized in that**
respective end side supports (6) are formed under the floor arrangement (2) on the outer end sides (5) of the floor arrangement (2) lying in the transverse direction (X), to which end side supports the outer end sides (5) of the floor arrangement (2) are connected in a liftable manner.

3. The coupling module (100) according to claim 2,
**characterized in that**
the floor arrangement (2) forms a rocker arrangement with the canopy roof (1) by means of the central mounting on the support body (3), so that, when the floor arrangement (2) is pivoted, the height of the first outer end side (5) of the floor arrangement (2) above the first end side support (6) increases and the height of the second outer end side (5) of the floor arrangement (2) above the opposite second end side support (6) decreases and vice versa.

4. The coupling module (100) according to one of the claims 2 or 3,
**characterized in that**
at least one mechanical connecting element (7) is disposed between the outer end sides (5) of the floor arrangement (2) and the end side supports (6).

5. The coupling module (100) according to claim 4,
**characterized in that**
at least one pivot drive (8) is provided, with which the mechanical connecting elements (7) between the outer end sides (5) of the floor device (2) and the end side supports (6) can be controlled and/or activated.

6. The coupling module (100) according to claim 5,
**characterized in that**
at least one pivot drive (8) is provided, wherein a respective coupling element (9) is formed between the pivot drive (8) and both mechanical connecting elements (7).

7. The coupling module (100) according to claim 6,
**characterized in that**
the coupling elements (9) between the pivot drive (8) and the mechanical connecting elements (7) are designed as pull and/or push rods and/or as torsion rods.

8. The coupling module (100) according to claim 6 or 7,
**characterized in that**
the pivot drive (8) is formed centrally under the floor arrangement (2) and/or **in that** the pivot drive (8) is arranged on the support body (3).

9. The coupling module (100) according to one of the above claims,
**characterized in that**
at least one flexible surface body (12) is arranged in the region between the pendular frame (10) and a base frame (22) of the cabin (21).

## Revendications

1. Module de couplage (100) pour la formation d'une interface entre la cabine (21) d'une passerelle d'embarquement (20) et un avion, où le module de couplage (100) comprend un auvent (1) et un dispositif de plancher (2) enjambé par l'auvent (1), où le dispositif de plancher (2) est pivotable par rapport à la cabine (21) autour d'un axe de pivotement (4) horizontal, où le dispositif de plancher (2) supporte au moins indirectement l'auvent (1) et où l'auvent (1) est disposé au niveau d'un cadre pendulaire (10), où le cadre pendulaire (10) est reçu de manière portante au niveau du dispositif de plancher (2), **caractérisé en ce que**
- le module de couplage (100) comporte un corps de support (3) qui est disposé sous le dispositif de plancher (2), où
- au moins le dispositif de plancher (2) et l'auvent (1) sont reçus au niveau du corps de support (3) de manière au moins indirectement portante et pivotable autour de l'axe de pivotement (4),
- où l'axe de pivotement (4) commun est disposé dans ou sous le dispositif de plancher (2), où
- le corps de support (3) est disposé de manière centrée dans la direction transversale (X) sous le dispositif de plancher (2) et où l'axe de pivotement (4) s'étend perpendiculairement à la direction transversale (X) et est disposé sous la surface praticable du dispositif de plancher (2), et où
- au moins un cadre de support (11) est prévu par lequel le cadre pendulaire (10) est supporté au niveau du dispositif de plancher (2), de sorte que le cadre pendulaire (10) avec l'auvent (1) est disposé de manière fixe au niveau du dispositif de plancher (2) au moyen du cadre de support (11).

2. Module de couplage (100) selon la revendication 1,
**caractérisé en ce que**
des supports de côté d'extrémité respectifs (6) sont formés sous le dispositif de plancher (2) sur les côtés d'extrémité extérieurs (5) du dispositif de plancher (2) situés dans la direction transversale (X), les côtés d'extrémité extérieurs (5) du dispositif de plancher (2) sont reliés de manière à pouvoir être soulevés.

3. Module de couplage (100) selon la revendication 2,
**caractérisé en ce que**
le dispositif de plancher (2) forme un agencement à bascule avec l'auvent (1) au moyen du montage central sur le corps de support (3), de sorte que, lorsque le dispositif de plancher (2) est pivoté, la hauteur du premier côté d'extrémité extérieur (5) du dispositif de plancher (2) au-dessus du premier support de côté d'extrémité (6) augmente et la hauteur du deuxième côté d'extrémité extérieur (5) du dispositif de plancher (2) au-dessus du deuxième support de côté d'extrémité opposé (6) diminue et vice versa.

4. Module de couplage (100) selon l'une des revendications 2 ou 3,
**caractérisé en ce qu'**
au moins un élément de liaison mécanique (7) est disposé entre les côtés d'extrémité extérieurs (5) du dispositif de plancher (2) et les supports de côté d'extrémité (6).

5. Module de couplage (100) selon la revendication 4,
**caractérisé en ce qu'**
il est prévu au moins un entraînement pivotant (8), avec lequel les éléments de liaison mécaniques (7) entre les côtés d'extrémité extérieurs (5) du dispositif de plancher (2) et les supports de côté d'extrémité (6) peuvent être commandés et/ou activés.

6. Module de couplage (100) selon la revendication 5,
**caractérisé en ce qu'**
il est prévu au moins un entraînement pivotant (8), un élément de couplage (9) respectif étant formé entre l'entraînement pivotant (8) et les deux éléments de liaison mécaniques (7).

7. Module de couplage (100) selon la revendication 6,
**caractérisé en ce que**
les éléments de couplage (9) entre l'entraînement pivotant (8) et les éléments de liaison mécanique (7) sont conçus comme des barres de traction et/ou de compression et/ou comme des barres de torsion.

8. Module de couplage (100) selon la revendication 6 ou 7,
**caractérisé en ce que**
l'entraînement pivotant (8) est formé au centre sous le dispositif de plancher (2) et/ou **en ce que** l'entraînement pivotant (8) est disposé sur le corps de support (3).

9. Module de couplage (100) selon l'une des revendications précédentes,
**caractérisé en ce qu'**
au moins un corps plat flexible (12) est disposé dans la région située entre le cadre pendulaire (10) et un cadre de base (22) de la cabine (21).
